(19) Europäisches Patentamt
European Patent Office
Office européen des brevets

(11) EP 4 582 248 A1

(12) **EUROPEAN PATENT APPLICATION**

(43) Date of publication:
09.07.2025 Bulletin 2025/28

(21) Application number: 24217342.5

(22) Date of filing: 04.12.2024

(51) International Patent Classification (IPC):
*B32B 5/02* (2006.01)    *B32B 7/12* (2006.01)
*B32B 25/02* (2006.01)   *B32B 25/04* (2006.01)
*B32B 25/08* (2006.01)   *B32B 27/30* (2006.01)
*B32B 27/32* (2006.01)   *B32B 27/34* (2006.01)
*B32B 27/40* (2006.01)

(52) Cooperative Patent Classification (CPC):
**B32B 5/02; B32B 7/12; B32B 25/02; B32B 25/042;
B32B 25/08; B32B 27/308; B32B 27/32;
B32B 27/34; B32B 27/40;** B32B 2250/03;
B32B 2250/40; B32B 2255/02; B32B 2255/26;
B32B 2260/021; B32B 2260/046;          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 05.01.2024 US 202463618047 P

(71) Applicant: ContiTech Deutschland GmbH
30175 Hannover (DE)

(72) Inventors:
• Podias, Stavros
  30175 Hannover (DE)
• Dr. Seibold, Sebastian
  30175 Hannover (DE)
• Dr. Minkin, Andrey
  30175 Hannover (DE)
• Bäuerle-Müller, Christel
  30175 Hannover (DE)
• Kantorek, Frank
  30175 Hannover (DE)
• Bachir, Mohamad
  Fairlawn, 44333 (US)
• Brown, Donald
  Fairlawn, 44333 (US)

(74) Representative: Preusser, Andrea
Continental Aktiengesellschaft
Intellectual Property
Postfach 169
30001 Hannover (DE)

(54) **FLEXIBLE BELTS ON THE BASIS OF THERMOPLASTIC ELASTOMERS AND POLYOLEFIN BASED FABRICS**

(57) The present invention is concerned with belts comprising a fabric layer containing polyolefin yarns or a polyolefin fabric, a layer of thermoplastic elastomer cover material, and an adhesive layer bonding both materials together, wherein the adhesion layer is constituted from a polyurethane hot melt adhesive having a melting temperature of less than 250°C. The present invention is further concerned with methods for the production of respective belts and the use of a polyurethane hot melt adhesive having a melting temperature of less than 250°C to prepare a belt having a thermoplastic elastomer cover material and a layer of fabric containing polyolefin yarns or a polyolefin fabric.

Figure 1

(52) Cooperative Patent Classification (CPC): (Cont.)
B32B 2274/00; B32B 2307/30; B32B 2307/31;
B32B 2307/544; B32B 2307/718; B32B 2307/738;
B32B 2413/00; B32B 2433/02

**Description**

The present invention is concerned with flexible belts comprising a fabric layer containing polyolefin yarns or a polyolefin fabric, a layer of thermoplastic elastomer cover material, and an adhesive layer bonding both materials together, wherein the adhesive layer is constituted from a polyurethane hot melt adhesive having a melting temperature of less than 250°C. The present invention is further concerned with methods for the production of respective flexible belts and the use of a polyurethane hot melt adhesive having a melting temperature of less than 250°C to prepare a flexible belt having a thermoplastic elastomer cover material and a layer of fabric containing polyolefin yarns or a polyolefin fabric.

State of the art

Conventional conveyor belts today are produced with bodies of an elastomeric material and reinforcing elements for tensile reinforcement in the length direction, where pulling forces are applied during use. In most cases, these elements are cords or fabrics on the basis of polyester or polyamide (including polyaramide) fibers or steel cables, onto which the elastomer is applied from both sides to provide the body and thereafter vulcanized to consolidate the construction. Obviously, such belts cannot easily be recycled as the different materials have to be separated and the vulcanized rubber cannot be recycled in the regular sense since the crosslinking effected by vulcanization is not reversible. This leads to a situation, where recycling is usually not economically feasible, so that the belts are only used as a feedstock in "thermal recycling".

A possible means to avoid the problems of reusability of vulcanized materials is to use thermoplastic elastomers ("TPE") for the carcass of the belt, as these materials can be remolten and thus more easily be separated from reinforcement materials. Such belts can e.g. be produced by extruding the thermoplastic elastomer onto the reinforcing element (or elements) followed by cooling to provide the respective reinforced belt.

As an alternative, non-reinforced belts are known (e.g. in the food industry), which avoid the problem of material separation altogether. These belts are mostly made of polyurethane, but due to the lack of reinforcement have a tendency to stretch while in use, which results in manufacturing shutdowns where the conveyor lines are stopped to allow for reworking the belt to take up excessive slack. In addition, such belts can only be used for applications, where the belting is not exposed to significant deforming forces.

WO 2021/188760 A1 describes a reinforced food grade belt, which is formed from an elastomeric belt body material and a plurality of thermoplastic synthetic filaments, which extend in the length direction of the belt. These belts are described as being beneficial both in terms of having reinforcement and complying with safety protocols for food grade compliance. In WO 2021/188760 A1, the belt construction is such in that the thermoplastic synthetic filaments have a melting point, which is below the melting point of the thermoplastic elastomer. Due to this configuration, WO 2021/188760 A1 claims that the applied thermoplastic elastomer is molten into the belt when belt ends are connected together to form a continuous loop belt. However, in practice, the production of such belts is relatively complex, as it has to be ensured that the filaments do not completely melt or recrystallize, which would compromise the strength of the belt.

US application No. US 63/218,500 describes reinforced elastomer parts comprising a reinforcement member and a layer made of thermoplastic elastomer, where the materials of the reinforcement member and the thermoplastic elastomer are compatible to the extent that they can be processed to form a homogeneous single-phase or multi-phase mixture above the melting temperature of the materials. This construction allows for a uniform processing of the parts in a melting recycling process without the necessity for elaborate separation of different materials of the elastomer parts.

WO 2023/180515 A1 describes a reinforced elastomer component with a strength carrier made of thermoplastic polymer and a matrix or support made of thermoplastic elastomer, wherein the strength carrier is formed from a polymer material which can be processed with melting with the melting phase of the thermoplastic elastomer to a homogeneous single-phase or multiphase mixture.

Recently, the inventors have developed reinforced belts (not yet published), which comprise an upper thermoplastic elastomer layer, a reinforcing fabric and a lower thermoplastic elastomer layer, wherein the fabric is positioned between the upper and lower elastomer layers and comprises polyolefin yarns. Such belts have the advantage, that after the belt has exceeded its regular use time the thermoplastic elastomer can be compounded with the polyolefin reinforcement material without relevant detrimental effect on the mechanical properties of the elastomer and that such belts provide favorable characteristics for light to heavy duty applications (belt strength classes 400 N/m or more) as e.g. in paper or agricultural products. In such belts, it is not necessary to separate reinforcement elements from thermoplastic elastomer, which significantly simplifies the recycling process.

For these belts, the problem has occurred however that the attachment of the reinforcing fabric is quite challenging, if such attachment is performed by surface melting of the thermoplastic elastomer layer. In such processes, when the polyolefin or polyolefin yarn containing fabric is applied thereon the reinforcement is exposed to higher temperatures, whereupon the characteristics of the polyolefin reinforcement may deteriorate (e.g. due to degradation or a loss in crystallinity of UHMWPE). Accordingly, there is a need for effecting an attachment of a polyolefin reinforcement material to a thermoplastic elastomer belt cover, which does not expose the polyolefin reinforcement material to conditions where the mechanical properties deteriorate to a relevant degree. In addition, there is a need for a process, which is easy to implement and which can be performed in a continuous manner to provide respective laminates.

The present application addresses these needs.

Description of the invention

In the investigations, which are underlying the present invention, it has been found that a polyurethane hot melt adhesive, which has a melting temperature of less than 250°C is particularly suitable for the production of belts and in particular belts with thermoplastic elastomers and reinforcement fabrics, which are based on polyolefins. Such hot melt adhesives can be molten and can then attach themselves to the respective cover material and fabric layer while avoiding exposure of the fabric to high temperatures. In addition, the use of an adhesive, which is not tacky to a relevant extent at ambient temperature allows an easy fabrication of laminate of the fabric and thermoplastic elastomer cover material, as all constituents for the production of the later laminate can be provided on rolls, and continuously guided to a lamination device, where the layers can then be attached to one another.

Accordingly, in a first aspect, the present application concerns a belt comprising a fabric layer containing polyolefin yarns or a polyolefin fabric, a layer of thermoplastic elastomer cover material, and an adhesive layer bonding both materials together, wherein the adhesive layer is constituted from a polyurethane hot melt adhesive having a melting temperature of less than 250°C.

Whereas the belts according to the invention are usually flexible, this characteristic results from the use of a thermoplastic elastomer cover material and a fabric layer, so that in the following the inventive belts will be usually be addressed just as "belts", whereas it is clear that the belts are "flexible belts".

The thermoplastic elastomer of the cover material is not subject to any relevant restriction, except that it must be remeltable and sufficiently stable under regular use condition (e.g. at temperatures in a range of about -30 to 60°C). The thermoplastic elastomer is preferably based on a thermoplastic elastomer which is miscible with the polyolefin of the fabric. Accordingly, the thermoplastic usually is not based on a fluoropolymer or perfluorinated polymers, which do regularly not meet this requirement. Preferred thermoplastic elastomer inventive belt comprise a non-fluoropolymer thermoplastic vulcanisate, a thermoplastic polyolefin or a thermoplastic polyurethane as base material.

Suitable materials, which meet this requirement include in particular thermoplastic polyolefin, thermoplastic vulcanisate, ethylene acrylate rubber (AEM), acrylate rubber (ACM), preferably in combination with polyamide and thermoplastic polyurethane elastomer. Particularly suitable materials for the thermoplastic elastomer include EPDM (ethylene propylene diene rubber) or mixtures thereof with polyolefins, preferably in the form of polypropylene. Such mixtures can be used as TPO (thermoplastic polyolefin) or TPV (thermoplastic vulcanisate = crosslinked "thermoplastic polyolefin"). A particularly suitable polypropylene which can be used in such blends is, for example, a polypropylene with a density of 0.90 to 0.91 g/cm$^3$.

An ethylene-propylene-diene rubber having an ethylene content in the range of 45 to 75% by weight and particularly 45 to 55% by weight is preferred as the EPDM. The diene content here is suitable in the range from 0.1 to 12% by weight, preferably in the range from 2 to 10% by weight and particularly preferably in the range from 3 to 9% by weight. Any dienes used in EPDM can be used here as dienes, with cyclopentadiene, ethylidene norbornene and 1,4-hexadiene being preferred dienes.

In a particularly preferred embodiment, the thermoplastic elastomer is a thermoplastic polyurethane elastomer which is constituted from TDI (toluylendiisocyanate) and/or MDI (methylenebisphenyldiisocyanate) and a least one polymeric polyol. In the thermoplastic polyurethane elastomer the polymeric polyol is suitably selected from polyester polyols, preferably on the basis of adipic acid, and polyether polyols, preferably on the basis of polytetrahydrofurane. The dialcohol component in the polyester polyol is usually an aliphatic dialcohol such as ethylene glycol, 1,3-propandiol, 1,4-butandiol or a respective $\alpha,\omega$-diol of a linear or branched C4 to C10-alkane.

The thermoplastic elastomer can also contain conventional additives, such as fibers or fillers for reinforcement purposes, or formulation auxiliaries. However, the thermoplastic elastomer and/or the thermoplastic polymer preferably contain such components in a proportion of up to 40% by weight at most, for example in a proportion of 10 to 30% by weight. Furthermore, it is preferred that the inventive belt does not contain any components that counteract an intimate mixing of the components of the thermoplastic elastomer and the fabric comprising polyolefin yearn of the polyolefin fabric.

The yarns in the fabric, which are oriented in the length direction of the belt suitably have a tensile strength which is higher than the tensile strength in the width direction by at least 10%. Moreover, preferably the yarns in the length direction are oriented such that they do not twist against the straight line of extension by an angle of more than 30°.

The thermoplastic elastomer and the polyolefin in the polyolefin yarns are sufficiently miscible and compatible so that on melting they can form a homogenous mixture and can be homogenized with one another in the melt to provide either a single-phase mixture or at least a sufficiently stable dispersion of one material in the other material, which may have several (= two or more) phases. The materials of the fabric and of the thermoplastic elastomer are preferably matched

EP 4 582 248 A1

to one another in such a way, that only one phase forms in the melt.

The presence of a single phase in the mixture can be detected, for example, by means of DSC, where only one melting range without two distinguishable melting points is detected. Accordingly, the skilled person in the art is readily able to determine an appropriate combination of materials for the thermoplastic elastomer and the polyolefin in the yarns of the fabric using his or her background knowledge and, if necessary, some experimentation to determine the miscibility of the materials.

The fabric preferably further preferably has a tensile strength in the length direction of the belt, determined according to DIN EN ISO 13934-1, of at least 100 N/mm, and more preferably in the range from 400 N/mm to 4000 N/mm. In addition, it is preferred that the tenacity of the yarns in the warp direction is higher by at least 10% than the tenacity of the yarns in the weft direction, where more preferably the difference in the tenacity is 100% or more and even more preferably 200% or more, where the tenacity is given in cN/tex as determined by DIN EN ISO 5079:2021. In one embodiment, the difference in the tenacity is 1000% or less. Concerning absolute values, in one embodiment the yarns in the warp direction have a tenacity of 15 cN/dtex or more, preferably of 20 to 50 cN/dtex and more preferably of from 25 to 40 cN/dtex and the yarns in the weft direction have a tenacity of 13.5 cN/dtex or less, preferably of 2 to 12 cN/dtex and more preferably of from 4 to 10 cN/dtex.

In one embodiment, the yarns in the fabric which extend in the length direction of the belt (as designated as warp direction) are based on a material which provides a higher tensile strength than the yarns which are provided in the width direction (as designated as weft direction), where the difference between the two is at least 10%. For the comparison of the respective tensile strength, the tensile strength is determined according to DIN EN ISO 2062.

In addition, it is preferred that the yarns, which extend in the length direction of the belt, are substantially straight in the length direction, with a minimal level of crimp, preferably with a crimp level of less than 1%. In this manner, it can be ensured that the fabric provides the strength in the length direction directly when it is stressed and there is no offset, which results from bringing the yarn, which is twisted around a straight line of the direction of extension, into a straight line. Here the angle indicates the maximum of the twist of the yarn towards the length direction. In a

The polyolefin yarns can be made of any polyolefin, which is suitable for the production of fibers and/or yarns. Preferably, the polyolefin yarns are based on polyethylene and/or polypropylene, as these are the most readily available polyolefins and they can be blended into one another to provide a homogeneous or substantially homogeneous mixture. In one embodiment, the fabric has polyethylene yarns in the length and width direction, where the yarns in the width direction have a tensile strength which is at least 10% less than the tensile strength in the length direction. In another embodiment, the fabric has polypropylene yarns in the length and width direction, where the yarns in the width direction have a tensile strength which is at least 10% less than the tensile strength in the length direction. In a particularly preferred embodiment, the fabric has polyethylene yarns in the length direction of the belt and polypropylene yarns in the width direction of the belt.

The polyethylene in the polyethylene yarns is preferably a polyethylene with a molecular weight of at least 1,000,000 g/mol and more preferably with a molecular weight Mw of from 2,000,000 to 6,000,000 g/mol. Such molecular weight is generally referred to as UHMWPE. The molecular weight Mw in this case is determined via the intrinsic viscosity ("IV", as measured on solution in decalin at 135°C), which is a measure for the molecular weight, but can more easily be determined than actual molecular weight parameters like $M_n$ and $M_w$. There are several empirical relations between IV and Mw. For the purposes of this invention, the molecular weight $M_w$ is calculated from the intrinsic viscosity via the empirical equation $M_w = 5.37 * 10^4 [IV]^{1.37}$ (see EP 0504954 A1).

UHMWPE yarns are particularly favorable as they provide a typical high tensile strength of 528 N to 636 N per single yarn (at a linear density of 1760 dtex) when tested according to ISO 2062. Accordingly, UHMWPE yarns are preferably used as yarn in the length (or warp) direction of the belt.

Polypropylene yarns for the use in this invention preferably provide a tensile strength of from 60 N to 300 N per single yarn (at a linear density of 930 to 4400 dtex, respectively), which is sufficiently lower than the tensile strength of the UHMWPE yarns. Accordingly, polypropylene yarns are preferably used in the width (or weft) direction of the belt.

The linear density of the yarns in the fabric, which is used for reinforcement in the reinforced belts of the invention is not subject to any relevant restrictions, as long as the yarn provides the required strength to the fabric and belt, into which it is incorporated. Here, the linear density of the yarns especially in the length (or warp) direction of the fabric can be varied over a broad rage, but preferably is from 220 to 3600 dtex and more preferably from 1760 to 3520 dtex. Likewise, the linear density of the yarns in the width (or weft) direction of the fabric in the belt can be varied in a broad range and preferably is within the range of 930 to 8500 dtex.

The yarns can be formed from one single yarn or a multitude of single yarns, which are plied and twisted together. The single yarns in either case preferably have a linear density in the length direction of from 220 dtex to 3300 dtex and more preferably from 1760 to 2640 dtex. Irrespective of whether the yarns in the width direction are formed from a single yarn or a multitude of single yarns, the single yarns in the width direction preferably have a linear density of from 930 dtex to 4400 dtex.

The yarn in both the length and width direction can be a single yarn or can be assembled from multiple single yarns, which are cabled or twisted together to provide the yarn. In one embodiment, the yarns in the length and/or the width direction are constituted from 1 to 10 single yarns and preferably from 1 to 5 single yarns. In a particularly preferred embodiment the yarns in the length and the width direction are constituted from 1 to 5 single yarns. If the yarn is constituted from more than one single yarn, the yarn can also be designated as a secondary yarn, which is constituted form the primary single yarns.

The fabric can have any suitable weaving pattern, and it is possible that the yarns, which are oriented in the warp direction have a higher tensile strength than the yarns which are predominantly oriented in the weft direction. In one embodiment, the weaving pattern is a single layer, double layer or multiple layer pattern. In a preferred embodiment, the weaving pattern is a weaving pattern with a straight warp design or a 3D weaving design. Here 3D weaving indicates a fabric having substantially straight yarns in the warp and weft direction, which further comprises yarns designated as "Z-yarns", which fix the crossed warp and weft yarns on one another via a zig-zag weaving pattern.

The yarns providing the fabric and especially the yarns, which in the fabric provide the warp yarns, can be twisted or non-twisted yarns, where a twisting in the range of from 0 to 300 turns per meter (tpm) is preferred and a twisting of from 25 to 80 tpm is more preferable. When the yarns are twisted yarns, this has the effect of increasing the bundle integrity, especially for the weaving process. In addition, with an optimized twist of the single yarns, the dynamic properties of fabrics can be increased. Multiple twisting arrangements for assembled yarns are also possible.

As noted above, the yarns in the warp direction in a preferred embodiment are yarns of UHMWPE. In addition or in alternative thereto, it is preferred that the yarns are oriented that they do not twist against the straight line of extension by an angle of more than 25°, more preferably not more than 20° and even more preferably not more than 10°. As noted above, this design ensures that the belt provides a high tensile strength and low elongation even at low tensile stresses of about 10% of the breaking strength.

Another factor, which may be used for the characterization of yarns, is the twist factor, which is a measure of the degree of twisting of a yarn. The twist factor K of the plied yarn (or more precisely of the elementary filaments constituting said plied yarn) is proportional to the twist angle and is expressed according to the following relation:

$$K = \text{(twist in turns/meter)} \times [\text{linear density of strand (unit: dtex)} / (10000 \cdot \rho)]^{1/2}$$

Here, the twist is expressed as the number of turns per meter, the linear density is expressed as dtex (weight of 10000 meters of the strand in grams), and $\rho$ is the density or mass per unit volume of the material from which the plied yarn is made in units of g/cm$^3$ (approximately 0.94 for UHMWPE and 0.91 for polypropylene).

The filaments constituting a multifilament yarn made of UHMWPE, which is preferred for use in the inventive reinforced belt of fabric, are preferably twisted together with a twist factor between 5 and 90, more preferably between 10 and 50. Further, it is preferred that the yarns have a twist level of between 25 turns/m and 150 turns/m, more preferably between 25 turns/m and 50 turns/m,

The filaments constituting a multifilament yarn made of high tenacity polypropylene, which is preferred for use in the inventive reinforced belt of fabric, are preferably twisted together with a twist factor comprised between 10 and 100, preferably between 20 and 65. Further, it is preferred that the yarns have a twist level of between 25 turns/m and 150 turns/m, preferably between 50 turns/m and 80 turns/m.

The yarns can be S twisted or Z twisted. In some instances, a combination of alternating S and Z twist, or solely S or Z twisting can be used.

The polyurethane hot melt adhesive, which is used as hot melt adhesive preferably has a melting temperature, which is 200°C or less, preferably 180°C or less, and more preferably in the range of 100 to 160°C. In a particularly preferred embodiment, the application temperature is even less than 150°C. The use of a polyurethane hot melt adhesive with a low melting temperature has the advantage that it can be applied at a temperature, where no relevant melting and/or decrystallisation of the polyolefin in the polyolefin yarns or the polyolefin fabric is to be expected. Thus, the production of respective laminates is possible without relevant deterioration of the properties of the fabric.

The polyurethane hot melt adhesive should have the required mechanical characteristics that it can provide the desired fast attachment of the thermoplastic elastomer cover layer to the fabric layer. Here, if the cover layer is based on a thermoplastic elastomer cover material, the use of a polyurethane hot melt adhesive has the advantage of good material compatibility with the cover material. At the same time, good attachment of the fabric layer is achieved in that in the molten state, the hot melt adhesive partially penetrates into the fabric layer, and part of the yarns become embedded into the adhesive to thereby provide fast attachment.

The polyurethane hot melt adhesive use in the belts of the present invention is not subject to any relevant restrictions. Suitable properties for the polyurethane hot melt adhesive under conditions of ambient temperature include e.g. a tensile strength (at 23°C) of at least 5 MPa, preferably at least 8 MPa and more preferably at least 9 MPa. The upper limit for the tensile strength can range up to 80 MPa, but is regularly up to 70 MPa. The elongation at break is preferably at least 200%, more preferably at least 250% and even more preferably in the range of about 160 to 700% (where the respective characteristics are determined by according to DIN 53504:2017).

The polyurethane hot melt adhesive according to one embodiment is a non-reactive polyurethane hot melt adhesive, i.e. it can be remolten by heating the adhesive above the melting temperature. The use of a non-reactive polyurethane hot melt adhesive has the advantage that the latter belt is constituted only from remeltable components, and thus can be molten into a single composition without the necessity to remove components.

In another embodiment, the polyurethane hot melt adhesive is a reactive adhesive (usually in a 1K formulation), where upon heating of the polyurethane hot melt adhesive crosslinking of the adhesive can occur. Since this, with a high degree of crosslinking, prevents that the belt can later be completely molten, the use of reactive polyurethane hot melt adhesive is less preferred, or at least with the use of such adhesives the amount of the adhesive in the belts should be kept at a low level (i.e. the content of the reactive polyurethane hot melt adhesive relative to the total weight of the belt should be less than 10 wt.-%, preferably less than 8 wt.-% and more preferably less than 5 wt.-%).

Particularly suitable reactive polyurethane hot melt adhesives, which can be used in the inventive belts, have one or more of the following properties:

- a shore D hardness in the range of 30 to 60 and preferably 40 to 50 (determined according to ISO 7619-1:2010);
- a tensile strength of 15 to 30 MPa and preferably 20 to 25 MPa (determined according to DIN 53504:2017);
- an elongation at break of 500 to 900 % and preferably 600 to 800% (determined according to DIN 53504:2017);
- a modulus of from 25 to 50 and preferably 30 to 45 MPa (determined according to ISO 1827:2022);
- a viscosity at 120°C von 5000 to 15000 cps and preferably form 7000 to 12000 cps (determined with Brookfield viscometer with thermoshell using spindle #27).

The reactive polyurethane hot melt adhesives can be based on TDI (toluylendiisocyanate) and/or MDI (methylenebisphenyldiisocyanate) or on aliphatic polyisocyanates (such as hexamethylendiisocyanate), and a polyol, which is preferably a polyester polyol. The reactive polyurethane hot melt adhesives may be constituted from polyurethane prepolymers having pendant isocanate residues, which are capped (and thus made inactive) with small molecules. Upon heating, these small molecules can detach themselves from the isocyanate moieties (as the capping reaction is reversible) and then the isocanate can react with other functional groups (e.g. OH or $NH_2$), or can react with moisture to form $NH_2$ which in turn can then react with other isocyanate groups.

If the polyurethane hot melt adhesive is non-reactive, the starting materials, from which the adhesive it is made, can be essentially the same as in the case of a reactive polyurethane hot melt adhesive, except that the composition will not have any reactive or capped isocyanate groups. Preferred non-reactive polyurethane hot melt adhesives are based on ester or ether polyols and have one or more of the following properties:

- a softening point of higher than 70°C and preferably within the range of 80 to 95°C,

- a melting range of higher than 85°C and preferably within the range of 90 to 105°C;

- a density of higher than 1,05 $g/cm^3$, and preferably within the range of 1,1 to 1,2 $g/cm^3$.

Moreover, from a perspective of mechanical properties it is preferred that the non-reactive polyurethane hot melt adhesive has a shore A hardness of from 50 to 85 and preferably 55 to 80, a tensile strength of 8 to 20 MPa and preferably 10 to 18 MPa and a elongation at break of 500 to 1200% and preferably 550 to 1100% (the respective properties here are determined at indicated above for the reactive polyurethane hot melt adhesive).

In a further preferred embodiment, the adhesion of the polyurethane hot melt adhesive is improved by coating the fabric layer and/or the thermoplastic elastomer cover material with a polyurethane coating. Such coating can effectively be applied by treating the respective surface with a water-based polyurethane solution or dispersion (or by immersing the fabric in a respective water-based polyurethane solution or dispersion followed by drying), whereby the polyurethane from the aqueous solution of dispersion is deposited on the material or yarns of the fabric. Whereas it is also possible to coat the thermoplastic elastomer cover material with a respective coating, especially if the thermoplastic elastomer therein is based on polyurethanes, this does not significantly improve the adhesion of the hot melt adhesive, so that from a cost and effort perspective, the coating is preferably only applied to the fabric layer.

For respective water polyurethane solutions or dispersion, it is preferred that the polyurethane therein has a tensile strength of at least 10 MPa, preferable at least 15 MPa, and more preferably in the range of 18 to 70 MPa and/or an elongation at break of at least 200%, preferably at least 250% and more preferably in the range of about 160 to 700%. As will be apparent to the skilled practitioner, these properties are determined for the polyurethane in the bulk state and not for the dispersion or solution.

A particularly preferred belt according to the instant invention comprises a middle fabric layer containing polyolefin yarns or a polyolefin fabric, and outer layers of thermoplastic elastomer cover material on both sides thereof, wherein the respective layers are bonded to each other with adhesive layers constituted from a polyurethane hot melt adhesive having a melting temperature of less than 250°C. I.e. in such belts, the thermoplastic elastomer cover material is provided on both outer faces thereof and the fabric is provided in the middle of the belt. In this way, the fabric can effectively reinforce the belt and during use is not exposed to the outer environment, where it could be damaged.

The inventive belt further preferably has a fast attachment of the fabric layer to the thermoplastic elastomer cover material, which is such that the peel strength between the thermoplastic elastomer cover material and the fabric containing polyolefin yarns or a polyolefin fabric is at least 3.5 N/mm, preferably at least 4.0 N/mm and more preferably in the range of 4.2 to 20 N/mm. A particularly suitable and effective peel strength is in the range of from 4.5 to about 12 N/mm.

The belt can have any shape of a belt for force transmission, such as e.g. a toothed belt or a V-shaped belt, wherein the fabric layer is sandwiched between upper and lower thermoplastic elastomer material layers. The belt can be an endless belt, or a belt, where two ends of a belt strand are connected to one another, e.g. via clamps or other holding means. The belt can be formed e.g. as a power transmission, timing or conveyor belt and the like, and can be used accordingly.

The inventive belt can be prepared by any process, which the skilled practitioner can come up with for the preparation of corresponding belts. A particularly effective process for the production of belts according to the invention comprises the following steps:

    i) providing a thermoplastic elastomer cover material;
    ii) providing a fabric containing polyolefin yarns or a polyolefin fabric;
    iii) positioning a polyurethane hot melt adhesive between the thermoplastic elastomer cover material and the fabric containing polyolefin yarns or a polyolefin fabric;
    iv) attaching the thermoplastic elastomer cover material to the fabric containing polyolefin yarns or polyolefin fabric by lamination.

The positioning of the polyurethane hot melt adhesive is possible by any means which are available to the skilled practitioner, i.e. the polyurethane hot melt adhesive can applied between the thermoplastic elastomer cover material and the fabric containing polyolefin yarns or a polyolefin fabric e.g. as a film, in powder or granulate form or as a liquid. The film can be in dry (non-tacky) form or can be a film, which is generated by applying a molten film on the respective surface. In particular, it is possible that the polyurethane hot melt adhesive is applied between the thermoplastic elastomer cover material and the fabric containing polyolefin yarns or a polyolefin fabric as a monolayer film by applying the adhesive on the fabric and/or the thermoplastic elastomer cover material with a doctor blade, by spraying or with a slot die.

In the embodiment, where the hot melt adhesive is applied as a dry film, the respective layers of thermoplastic elastomer cover material, polyurethane hot melt adhesive and fabric layer can simply be stacked onto one another and laminated by heating. In the case, there the hot melt adhesive is applied as a powder or laminate, one on the layers (i.e. either the thermoplastic elastomer cover material or the fabric layer) can be provided, the adhesive can then be applied thereon by an appropriate apparatus and subsequently, the applied adhesive can be covered with the respective other layer and laminated. When the polyurethane hot melt adhesive is applied as a molten film, the process can essentially be the same except that the molten film is applied on the layer and the other layer is then applied on the molten adhesive layer before lamination.

As noted above, in one embodiment, the inventive belt has two layers of thermoplastic elastomer cover material and a middle fabric layer. Such belt can suitably be prepared by a process with the following steps:

    i) providing two layers of thermoplastic elastomer cover material and one layer of fabric containing polyolefin yarns or a polyolefin fabric;
    ii) applying the polyurethane hot melt adhesive either on both sides of the fabric containing polyolefin yarns or a polyolefin fabric or on one side of each thermoplastic elastomer cover material layers;
    iii) positioning the fabric layer containing polyolefin yarns or a polyolefin fabric in the middle between the two layers of thermoplastic elastomer cover material;
    iv) laminating the arrangement of iii), preferably at a pressure of at least 5 bar and more preferably in the range of 10 to 25 bar.

In addition, for the embodiment as noted above where the fabric layer has a coating of water-based polyurethane dispersion or solution applied thereon, the respective coating can suitable be applied by immersing the fabric containing polyolefin yarns or a polyolefin fabric prior to application of a polyurethane hot melt adhesive in a water-based polyurethane solution or dispersion and subsequently drying the fabric to provide the fabric with a coating of polyurethane.

For all of the above indicated processes it is preferred that the process can be run continuously, i.e. with a continuous feed with the respective layers and with a continuous output of finished belt. Whereas the fabrication of inventive belts is also possible in a batch wise manner, this is not preferred as the operation of a batch wise process is more complex. For a continuous production process the thermoplastic elastomer cover material, the fabric containing polyolefin yarns or a polyolefin fabric and the polyurethane hot melt adhesive are suitably provided as continuous strands (the polyurethane hot melt adhesive can alternatively be applied as a continuous feed of powder, granulate, molten film or spray, which is applied on one of the layers of fabric or thermoplastic elastomer cover material) and are arranged and fed to a continuous lamination process.

In the process of attaching the adhesion laminate to the fabric containing polyolefin yarns or a polyolefin fabric, it has turned out that the use of lamination conditions have an impact on the bonding strength as achieved, as with unfavorable conditions for the fabric layer there may be decrystallization of the polyolefin in the polyolefin yarns whereby the strength of the laminate can be affected. Accordingly, in the inventive process it is preferred that the lamination is performed at a temperature of about 120 to 160°C, preferably of about 130 to 150°C and/or at a pressure of from 3 to 7 bar and preferably from 3.5 to 6 bar and/or wherein for lamination the layers are pressed together for a time of from 2 to 10 Min and preferably of from 3 to 6 Min.

In addition, since polyolefin surfaces are usually quite inert towards attachment of a polyurethane adhesive, it is possible to activate the surface of the fabric containing polyolefin yarns or a polyolefin fabric by treatment with plasma, corona, heat, flames or other known treatments, which provide surface activation of polyolefins. Alternative or in addition thereto, the surface can be activated by treatment with a suitable primer, or the fabric layer can be washed prior to attaching the adhesion layer in order to remove dirt, which may have a detrimental impact on the adhesion.

In a yet further aspect, the present invention concerns the use a polyurethane hot melt adhesive having a melting temperature of less than 250°C to prepare a belt having a thermoplastic elastomer cover material and a layer of fabric containing polyolefin yarns or a polyolefin fabric.

For the above explanations, embodiments and configurations that are specified as preferred or suitable for one aspect are also considered and described as preferred and suitable for other aspects, even if these combinations are not explicitly stated in the description for reasons of conciseness are.

Brief description of the drawings:

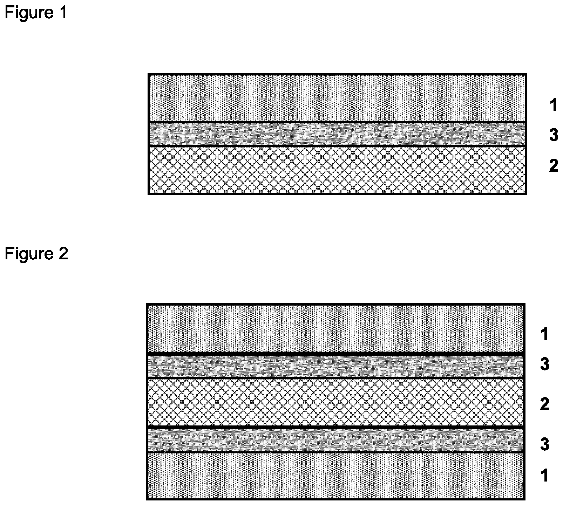

Figure 1 shows a schematic view of a belt according to the invention, wherein a cover material layer 1 is arranged on a fabric layer 2. Between the two layers, there is a hot melt polyurethane adhesive layer 3.

Figure 2 is an embodiment of a belt according to the invention, which has two cover material layers 1 at the two outer surfaces thereof, and a fabric layer 2 arranged in the middle of the belt. The fabric layer 2 is covered by two layers of hot melt polyurethane adhesive 3.

The belts according to the invention provide the following advantages vis-à-vis conventional respective belts in the art:

- the fabric layer has adequate adhesion in the range of 3.5 to 20 N/mm in peel/separation force to a belt cover layer of thermoplastic polyurethane elastomer. This adhesion level is above the requirement of bond strength given by all international conveyor belt standards.

- the invention permits the manufacturing of conveyor belts of such special composition and ensures durability and performance in the field.

- the invention allows a concept of an easy conveyor belt recycling by permitting adequate bonding for the conveyor belt application with minimal or even non crosslinked material content.

In the following, the present invention will further be described by means of some illustrating examples, which however should not be understood as limiting to the invention in any relevant manner.

Examples:

Example 1 (spray application of adhesive)

A laminate was produced from an UHMWPE-PP composite fabric and two Contilan® thermoplastic polyurethane elastomer layers with a thickness of 2 mm each (dimensions 160 x 100 mm). For this test, a 1K hotmelt polyurethane adhesive (based on MDI and having a regular application temperature of about 120°C, a tensile strength of 22.75 MPa and an elongation at break of 700%) was used as the adhesive.

Before use, the UHMWPE-PP composite fabric was washed in an ultrasonic bath for 1 min at 40°C, cleaned with isopropyl alcohol and the plasma treated. The respective Contilan® thermoplastic polyurethane elastomer layers were only cleaned with isopropyl alcohol and then dried. The 1K hotmelt polyurethane adhesive was heated to about 130°C and then applied by spraying.

To evaluate the application for the optimum result in peel strength, different methods were tried as follows:

Method 1): spaying the adhesive on the first side of the fabric and then attaching the elastomer layer to this side, followed by spaying the adhesive on the second side of the fabric and then attaching the elastomer layer to this side, followed by laminating the arrangement together by placing a 1.5 kg weight thereon for 10 min at 23°C.

Method 2): spaying the adhesive on the first elastomer layer and then attaching the first side of the fabric to this layer, followed by spaying the adhesive on the second elastomer layer and then attaching the elastomer layer to the other side of the fabric, followed by laminating the arrangement together by placing a 1.5 kg weight thereon for 10 min at 23°C.

Method 3): spaying the adhesive on the first and second side of the fabric and then attaching the respective elastomer layers to these sides, followed pressing for 4 min at 135°C at a pressure of 16 bar, followed by laminating the arrangement together by placing a 1.5 kg weight thereon for 10 min at 23°C.

Method 4): spaying the adhesive on the first and second elastomer layers and then attaching the respective sides of the fabric elastomer layers to these layers, followed pressing for 4 min at 135°C at a pressure of 16 bar, followed by laminating the arrangement together by placing a 1.5 kg weight thereon for 10 min at 23°C.

48 hours after the preparation was finished, the laminates where investigated according to ISO 11339:2022 (180° peeling) to determine the peel strength. The results of these tests are shown in the below table 1:

Table 1

|  | Sample 1 | Sample 2 | Sample 3 | Sample 4 |
|---|---|---|---|---|
| Preparation method | 1 | 2 | 3 | 4 |
| Average peel strength* [N/mm] | 5.1 | 3.9 | 7.6 | 8.3 |
| * = 3 test pieces from both sides. Expressed result are the average of 6 single results, 2 for each test piece. | | | | |

In the above tests all of the laminates provided a peel strength of 3.9 N/mm or more, which indicated acceptable adhesion.

Example 2 (use on non-reactive polyurethane hot melt adhesive films)

The preparation of the laminate as described in example 1 was repeated except that a polyurethane hot melt adhesive in the form of a film was used. The polyurethane hot melt adhesive had the following characteristics: Melting range 100 to 105°C; Density 1.2 g/cm$^3$. The respective laminates were prepared by placing all layers onto one another in the sequence: thermoplastic elastomer layer - adhesive layer - fabric layer - adhesive layer - fabric layer followed by pressing for 4 min at 140°C at 16 bar and cooling in a cold press for 4 min at 2 bar (procedure 1). Alternatively, pre-lamination was preformed for 10 sec at a temperature of 140°C and a pressure of 22 bar followed pressing lamination and cooling as in procedure 1 (procedure 2). In three of the below sample one sheet and in one sample two sheet of polyurethane adhesive were used.

In the same manner as described in Example 1, the thus prepared laminates were investigated for the peel strength between the cover layer and the fabric layer. The results of these tests are shown in the below table 2:

Table 2:

|  | Sample 5 | Sample 6[1] | Sample 7[1,2] | Sample 8[1,2] |
|---|---|---|---|---|
| Adhesive films per side | 1 | 1 | 1 | 2 |
| Procedure | 1 | 1 | 2 | 2 |

(continued)

|  | Sample 5 | Sample 6[1] | Sample 7[1,2] | Sample 8[1,2] |
|---|---|---|---|---|
| Peel Strength [N/mm] | 3.6 | 4.5 | 4.1 | 4.9 |
| 1 = fabric was washed prior to use; 2 = fabric was plasma treated prior to use. | | | | |

In the above tests, all of the laminates provided a peel strength of 3.6 N/mm or more, which indicated acceptable adhesion.

Example 3 (pretreatment of the fabric with a polyurethane dispersion)

The preparation of the laminate as described in example 1 was repeated except for the following differences: The fabric was first washed in an ultrasonic bath and dried and subsequently plasma treated. Thereafter, the fabric was dipped into a water-based polyurethane dispersion (polyurethane properties: softening temperature 210°C, tensile strength 21.6 MPa, elongation at break 260%), excess dispersion was removed with a spatula and the fabric was air dries in an oven at 85°C for 30 Min.

For the preparation of the laminate, the adhesive layers were first pre-laminated onto both sides of the fabric for 10 sec at 140°C and a pressure of 22 bar. Then, all layers were stacked onto one another in the sequence: thermoplastic elastomer layer - adhesive layer - fabric layer - adhesive layer - fabric layer and the laminate was pressed for 4 min at 140°C and a pressure of 16 bar followed by pressing at 23°C for 2min at 2bar. The adhesive was the same as in example 1, but was used as a film.

Table 3

|  | Sample 9 | Sample 10[1] | Sample 11[2] | Sample 12[1,2] |
|---|---|---|---|---|
| Peel strength [N/mm] | 6.3 | 6.2 | 6.8 | 5.6 |
| 1 = fabric was washed prior to use; 2 = fabric was plasma treated prior to use | | | | |

As is apparent form table 3, all of the laminates provided a peel strength of 5.6 N/mm or more, which indicated acceptable adhesion.

List of reference signs

1　　cover material layer
2　　fabric layer
3　　adhesive layer

**Claims**

1. A belt comprising a fabric layer containing polyolefin yarns or a polyolefin fabric, a layer of thermoplastic elastomer cover material, and an adhesive layer bonding both materials together, wherein the adhesive layer is constituted from a polyurethane hot melt adhesive having a melting temperature of less than 250°C.

2. Belt according to claim 1, wherein the thermoplastic elastomer is selected from thermoplastic polyolefin, thermoplastic vulcanisate, ethylene acrylate rubber (AEM), acrylate rubber (ACM), preferably in combination with polyamide and thermoplastic polyurethane elastomer.

3. Belt according to claim 2, wherein thermoplastic elastomer is a thermoplastic polyurethane elastomer which is constituted from TDI and/or MDI and a least one polymeric polyol selected from polyester polyols, preferably on the basis of adipic acid, and polyether polyols, preferably on the basis of polytetrahydrofurane.

4. Belt according to claim 1 or 2, where the fabric layer comprises yarns of polyethylene with a molecular weight Mw of from 2,000,000 to 6,000,000 g/mol in warp direction and yarns of polypropylene in weft direction or yarns of polyethylene with a molecular weight Mw of from 2,000,000 to 6,000,000 g/mol in both warp and weft direction.

5. Belt according to any one of the preceding claims, wherein the polyurethane hot melt adhesive has a melting temperature of 200°C or less, preferably 180°C or less, and more preferably in the range of 100 to 160°C and/or wherein the polyurethane hot melt adhesive is a reactive polyurethane hot melt adhesive and/or has a tensile strength of at least 5 MPa, preferably at least 8 MPa and more preferably in the range of 9 to 25 MPa.

6. Belt according to any one of the preceding claims, wherein the fabric layer containing polyolefin yarns prior to the application of the bonding with the polyurethane hot melt adhesive is treated with a water-based polyurethane solution or dispersion, which is deposited on the fabric of the fabric layer, wherein preferably the polyurethane from the water-based polyurethane solution or dispersion layer has a tensile strength of at least 10 MPa, more preferably at least 15 MPa, and even more preferably in the range of 18 to 70 MPa and/or an elongation at break of at least 200%, preferably at least 250% and more preferably in the range of about 160 to 700%.

7. Belt according to any one of the preceding claims, wherein the belt comprises a middle fabric layer containing polyolefin yarns or a polyolefin fabric, and outer layers of thermoplastic elastomer cover material on both sides thereof, wherein the respective layers are bonded to each other with respective adhesive layers constituted from a polyurethane hot melt adhesive having a melting temperature of less than 250°C.

8. Belt according to any one of the preceding claims, wherein the peel strength between the thermoplastic elastomer cover material and the fabric containing polyolefin yarns or a polyolefin fabric is at least 3.5 N/mm, preferably at least 4.0 N/mm and more preferably in the range of 4.2 to 20 N/mm.

9. A process for the production of a belt, in particular a belt according to any one of claims 1 to 8, comprising the steps:

    i) providing a thermoplastic elastomer cover material;
    ii) providing a fabric containing polyolefin yarns or a polyolefin fabric;
    iii) positioning a polyurethane hot melt adhesive between the thermoplastic elastomer cover material and the fabric containing polyolefin yarns or a polyolefin fabric;
    iv) attaching the thermoplastic elastomer cover material to the fabric containing polyolefin yarns or polyolefin fabric by lamination.

10. Process according to claim 9, wherein the polyurethane hot melt adhesive is applied between the thermoplastic elastomer cover material and the fabric containing polyolefin yarns or a polyolefin fabric as a monolayer film, in powder or granulate form or as a liquid, preferably wherein as a monolayer film by applying the adhesive on the fabric and/or the thermoplastic elastomer cover material with a doctor blade, by spraying or with a slot die.

11. Process for the production of a belt, in particular a belt according to claim 7, comprising the steps:

    i) providing two layers of thermoplastic elastomer cover material and one layer of fabric containing polyolefin yarns or a polyolefin fabric;
    ii) applying the polyurethane hot melt adhesive either on both sides of the fabric containing polyolefin yarns or a polyolefin fabric or on one side of each thermoplastic elastomer cover material layers;
    iii) positioning a fabric containing polyolefin yarns or a polyolefin fabric in the middle between the two layers of thermoplastic elastomer cover material;
    iv) laminating the arrangement of iii), preferably at a pressure of at least 5 bar and more preferably in the range of 10 to 25 bar.

12. Process according to any one of claims 9 to 11, wherein the fabric containing polyolefin yarns or a polyolefin fabric prior to application of a polyurethane hot melt adhesive is immersed in a water-based polyurethane solution or dispersion and subsequently dried to provide the fabric with a coating of polyurethane.

13. Process according to any one of claims 9 to 12, wherein the thermoplastic elastomer cover material, the fabric containing polyolefin yarns or a polyolefin fabric and the adhesion layer are provided as continuous strands and wherein the lamination process is continuous and/or wherein the lamination is performed at a temperature of about 120 to 160°C, preferably of about 130 to 150°C and/or at a pressure of from 3 to 7 bar and preferably from 3.5 to 6 bar and/or wherein for lamination the layers are pressed together for a time of from 2 to 10 Min and preferably of from 3 to 6 Min.

14. Process according to any one of claims 9 to 13, wherein the fabric, prior to attachment to the thermoplastic elastomer cover material, is treated by plasma-treatment, corona-treatment, heat-treatment, or flame treatment.

15. Use of a polyurethane hot melt adhesive having a melting temperature of less than 250°C to prepare a belt having a thermoplastic elastomer cover material and a layer of fabric containing polyolefin yarns or a polyolefin fabric.

Figure 1

Figure 2

Europäisches
Patentamt

European
Patent Office

Office européen
des brevets

# EUROPEAN SEARCH REPORT

**Application Number**

EP 24 21 7342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 472 804 A (ZHEJIANG DINGYUAN PLASTIC RUBBER CO LTD) 15 December 2017 (2017-12-15) * claims 1-6; figure 2; example 2 * | 1-15 | INV. B32B5/02 B32B7/12 B32B25/02 B32B25/04 |
| X | JP 2015 223727 A (NITTA KK) 14 December 2015 (2015-12-14) * paragraph [0031]; claims 1-11; examples 1-6 * | 1-15 | B32B25/08 B32B27/30 B32B27/32 B32B27/34 B32B27/40 |
| X | CN 104 326 212 B (AA PREC IND CONVEYOR SYSTEM SHANGHAI CO LTD) 15 February 2017 (2017-02-15) * claims 1-7; figure 1; examples 1-6 * | 1-15 | |

**TECHNICAL FIELDS SEARCHED (IPC)**

B32B

The present search report has been drawn up for all claims

| Place of search | Date of completion of the search | Examiner |
|---|---|---|
| The Hague | 15 April 2025 | Chatron-Michaud, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 7342

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2025

| Patent document cited in search report | | Publication date | Patent family member(s) | Publication date |
|---|---|---|---|---|
| CN 107472804 | A | 15-12-2017 | NONE | |
| JP 2015223727 | A | 14-12-2015 | NONE | |
| CN 104326212 | B | 15-02-2017 | NONE | |

EPO FORM P0459

For more details about this annex : see Official Journal of the European Patent Office, No. 12/82

**REFERENCES CITED IN THE DESCRIPTION**

**Patent documents cited in the description**

- WO 2021188760 A1
- US 63218500 B
- WO 2023180515 A1
- EP 0504954 A1